(19) Europäisches Patentamt / European Patent Office / Office européen des brevets

(11) **EP 3 216 545 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**28.09.2022 Patentblatt 2022/39**

(45) Hinweis auf die Patenterteilung:
**08.05.2019 Patentblatt 2019/19**

(21) Anmeldenummer: **16158882.7**

(22) Anmeldetag: **07.03.2016**

(51) Internationale Patentklassifikation (IPC):
**B22F 1/00** (2022.01)   **B22F 3/105** (2006.01)
**B33Y 70/00** (2020.01)   C22C 1/04 (2006.01)
**B33Y 10/00** (2015.01)   B33Y 80/00 (2015.01)

(52) Gemeinsame Patentklassifikation (CPC):
**B33Y 70/00; B22F 1/052; B22F 1/065;** B22F 10/28;
B22F 10/34; B22F 10/64; B33Y 10/00; B33Y 80/00;
C22C 1/0466; Y02P 10/25

(54) **EDELMETALLPULVER UND DESSEN VERWENDUNG ZUR HERSTELLUNG VON BAUTEILEN**

PRECIOUS METAL BASED POWDER AND ITS USE IN THE PREPARATION OF COMPONENTS

POUDRE EN METAL NOBLE ET SON UTILISATION POUR LA FABRICATION DE COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.09.2017 Patentblatt 2017/37**

(73) Patentinhaber: **Heraeus Deutschland GmbH & Co. KG**
**63450 Hanau (DE)**

(72) Erfinder:
• **Maier, Dirk**
**63067 Offenbach (DE)**
• **Humm, Stephan, Dr.**
**36396 Steinau (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
EP-A1- 2 727 898   WO-A1-2005/025783
WO-A1-2015/173790   WO-A2-2013/128416
WO-A2-2013/128416   DE-A1-102012 223 239
JP-A- 2009 270 130   JP-A- 2009 270 130
US-A1- 2014 170 598

• SIMCHI A: "THE ROLE OF PARTICLE SIZE ON THE LASER SINTERING OF IRON POWDER", METALLURGICAL AND MATERIALS TRANSACTIONS A: PHYSICAL METALLURGY & MATERIALS SCIENCE, ASM INTERNATIONAL, MATERIALS PARK, OH, US, Bd. 35B, Nr. 5, 1. Oktober 2004 (2004-10-01), Seiten 937-948, XP001214017, ISSN: 1073-5623
• Loreen Wermuth et al: "Characterization of Platinum alloy powder - PtRh 80-20 - for additive layer manufacturing", 6th European Conference for Aeronautics and Space Sciences (EUCASS) 6th European Conference for Aeronautics and Space Sciences (EUCASS), EUCASS association, pages 1-11, [retrieved on 2020-03-18]
• Jason Dawes, Robert Bowerman, Ross Trepleton: "Introduction to the Additive Manufacturing Powder Metallurgy Supply Chain", Johnson Matthey Technology Review, vol. 59, no. 3, 1 July 2015 (2015-07-01), pages 243-256, ISSN: 2056-5135, DOI: 10.1595/205651315X688686
• A. B. Spierings et al: "Powder flowability characterisation methodology for powder-bed-based metal additive manufacturing", Progress in Additive Manufacturing, vol. 1, no. 1-2, 1 June 2016 (2016-06-01), pages 9-20, ISSN: 2363-9512, DOI: 10.1007/s40964-015-0001-4
• SEYDA, V. ET AL: "Investigation of aging processes of Ti-6Al-4V powder material in laser melting", PHYSICS PROCEDIA, vol. 39, 1 January 2012 (2012-01-01), pages 425-431,

- ZITO et al.: "Optimization of SLM Technology Main Parameters in the Production of Gold and Platinum Jewelry", , May 2014 (2014-05), pages 439-470,
- N. HARNBY et al.: Mixing in the Process Industries, 1992, pages 10-12,
- G. K. JAIN et al.: "Flow Property" In: "Theory and Practice of Physical Pharmacy", 2012 page 57,
- J. Tomas: "Mechanics of Particle Adhesion", , 9 January 2006 (2006-01-09), pages 1-92,
- IGOR YADROITSEV: "Excerpt chapter 3" In: "Selective Laser Melting", 2009 ISBN: 978-3-8383-1794-6 pages 30-32, * ; * * ISBN: 978-3-8383-1794-6; pag. 30-32; *
- IGOR YADROITSEV: In: "Selective Laser Melting", 2009 ISBN: 978-3-8383-1794-6 page 21,
- A. STRONDL et al.: "Characterization and Control of Powder Properties for Additive Manufacturing", JOM, vol. 67, no. 3, 2015, DOI: 10.1007/s11837-015-1304-0
- J. DAWES et al.: "Introduction to the Additive Manufacturing Powder Metallurgy Supply Chain", Johnson Matthey Technol. Rev., 2015, pages 243-256,
- MICHAEL E. AULTON: "Powder Flow" In: "Aulton's Pharmaceutics: The Design and Manufacture of Medicines (4th edition)", 2013 ISBN: 978-0702042911 page 189,
- "Flow Property" In: "Theory and Practice of Physical Pharmacy", 2012 ISBN: 978-81-312-2824-1 page 57,
- ZITO et al.: "Optimisation of the Main Selective Laser Melting Technology Parameters in the Production of Precious metal Jewelry", Santa Fe Symposium Papers, May 2013 (2013-05), pages 1-20,

**Beschreibung**

Aufgrund ihrer Eigenschaften sind Platinmetalle interessante Werkstoffe für die Herstellung von Bauteilen, die während ihrer Verwendung hohen chemischen (insbesondere korrosiven), thermischen oder mechanischen Belastungen ausgesetzt sind.

Bauteile aus Edelmetall werden beispielsweise im Bereich der Medizintechnik, für Zündkerzen oder Düsen (z.B. Verbrennungsdüsen oder Spinndüsen) oder auch im Bereich der Schmuckherstellung verwendet. Aufgrund ihrer hohen Dichte sind die Platinmetalle wie z.B. Iridium oder Legierungen aus Platin und Iridium geeignete Materialien für die Herstellung von Schwungmassen, beispielsweise für Uhren (d.h. Unruh).

Metallische Bauteile werden häufig über Metall-Halbzeuge (d.h. metallische Halbfertigprodukte), die anschließend noch einer geeigneten Weiterbehandlung unterzogen werden, hergestellt. Bei Bauteilen mit komplexer oder filigraner Struktur beinhaltet die weitere Bearbeitung des Halbzeugs üblicherweise eine Zerspanung. Dies ist aber bei spröden Materialien wie z.B. Iridium oder dessen Legierungen mit anderen Platinmetallen entweder gar nicht möglich oder wenn doch, dann nur unter hohem Zeit- und Materialeinsatz.

Für Materialien mit sehr hohem Schmelzpunkt, insbesondere Iridium, Ruthenium, Osmium oder deren Legierungen, ist die Herstellung von Bauteilen über Halbzeuge nicht oder nur bedingt möglich, da wegen des hohen Schmelzpunktes keine geeigneten Formen für die Aufnahme der Schmelze zur Verfügung stehen.

Über additive Fertigungsverfahren lassen sich Bauteile mit komplexer dreidimensionaler Geometrie direkt herstellen. Die Additive Fertigung bezeichnet einen Prozess, bei dem auf der Basis von digitalen 3D-Konstruktionsdaten durch das Ablagern von Material schichtweise ein Bauteil aufgebaut wird. Üblicherweise wird dabei zunächst eine dünne Schicht des Pulverwerkstoffs auf die Bauplattform aufgetragen. Über einen ausreichend hohen Energieeintrag, beispielsweise in Form eines Laser- oder Elektronenstrahls, wird das Pulver an den Stellen zumindest teilweise aufgeschmolzen, die die Computer-generierten Konstruktionsdaten vorgeben. Danach wird die Bauplattform abgesenkt und es erfolgt ein weiterer Pulverauftrag. Die weitere Pulverschicht wird erneut zumindest teilweise aufgeschmolzen und verbindet sich an den definierten Stellen mit der darunterliegenden Schicht. Diese Schritte werden so häufig wiederholt, bis das Bauteil in seiner finalen Form vorliegt.

Um ein Pulver möglichst schnell und effizient in Form einer Schicht auf die Bauplattform aufzubringen, sollte dieses Pulver eine möglichst hohe Fließfähigkeit haben. Andererseits sollten die Qualität des Pulverauftrags und die Schüttdichte der Pulverschicht möglichst hoch sein. Außerdem sollte das nach dem additiven Fertigungsverfahren erhaltene Bauteil eine möglichst geringe Porosität aufweisen. Weitere relevante Eigenschaften des fertigen Bauteils sind beispielsweise eine hohe Kantenschärfe und eine möglichst geringe Oberflächenrauheit. In der Praxis zeigt sich jedoch, dass eine gleichzeitige Optimierung dieser Eigenschaften sehr schwierig ist. Häufig wird eine Verbesserung einer bestimmten Eigenschaft (z.B. Fließfähigkeit) auf Kosten einer der anderen Eigenschaften (wie z.B. Qualität des Pulverauftrags oder Dichte im fertigen Bauteil) erzielt.

Insbesondere für sehr hochschmelzende Platinmetalle bleibt es weiterhin eine große Herausforderung, Pulver bereit zu stellen, die nicht nur fließfähig sind, sondern sich in einem additiven Fertigungsverfahren unter Einwirkung einer energiereichen Strahlung auch zu einem Bauteil hoher relativer Dichte verarbeiten lassen.

WO 2013/128416 beschreibt die Verwendung einer Silberlegierung, die Germanium, Aluminium, Silizium und/oder Bor als Legierungselemente enthält, für additive Fertigungsverfahren.

JP 2009 270130 beschreibt die Verwendung sulfidierter Silberpartikel für additive Fertigungsverfahren.

Eine Aufgabe der vorliegenden Erfindung liegt in der Bereitstellung eines Edelmetallpulvers, mit dem sich in effizienter Weise über additive Fertigungsverfahren Edelmetall-Bauteile mit hoher Dichte (d.h. möglichst geringer Porosität) herstellen lassen. Die aus dem Edelmetallpulver herstellbaren Bauteile sollten außerdem eine möglichst hohe Kantenschärfe und/oder eine möglichst geringe Oberflächenrauheit aufweisen.

Gelöst wird die Aufgabe durch ein Pulver aus sphärischen Edelmetallpartikeln, die eine Partikelgrößenverteilung mit einem $d_{10}$-Wert von $\geq 10,0$ $\mu m$ und einem $d_{90}$-Wert von $\leq 80,0$ $\mu m$ aufweisen, wobei das Edelmetall Platin, Iridium, Palladium, Ruthenium, Rhodium oder Osmium oder eine Legierung aus mindestens zwei der vorgenannten Platinmetalle ist und wobei die Edelmetallpartikel eine mittlere Kristallitgröße $\geq 200$ nm aufweisen und die mittlere Kristallitgröße über Röntgenbeugung durch die weiter unten angegebene Methode bestimmt wird.

Im Rahmen der vorliegenden Erfindung wurde festgestellt, dass ein Edelmetallpulver aus sphärischen Partikeln, deren Größenverteilung den erfindungsgemäßen Kriterien hinsichtlich der $d_{10}$- und $d_{90}$-Werte genügt, eine hohe Fließfähigkeit aufweist und außerdem im Rahmen eines additiven Ferigungsverfahrens einen Pulverauftrag hoher Qualität und die Herstellung komplexer 3D-Bauteile hoher Dichte (d.h. niedriger Porosität) ermöglicht.

Wie nachfolgend noch eingehender beschrieben wird, können die sphärischen Edelmetallpartikel über Verdüsungsverfahren hergestellt werden. Um eine Partikelgrößenverteilung mit den oben definierten $d_{10}$- und $d_{90}$-Werten zu erhalten, können die über die Verdüsung erhaltenen Edelmetallpartikel anschließend einem Klassierungsverfahren wie z.B. Sieben, Windsichten oder Zentrifugieren unterzogen werden.

Im Rahmen der vorliegenden Erfindung wird die Partikelgrößenverteilung in Form einer Massenverteilungssummenkurve durch Laserbeugung bestimmt.

Das Edelmetall ist Platin, Iridium, Palladium, Ruthenium, Rhodium oder Osmium oder eine Legierung aus mindestens zwei dieser Platinmetalle (z.B. Platin-Iridium- oder Platin-RhodiumLegierungen).

Bevorzugt enthalten die Edelmetallpartikel Elemente, die kein Platinmetall sind, in einer Gesamtmenge von maximal 0,1 Gew%, bevorzugter maximal 0,01 Gew%. Somit bestehen die Edelmetallpartikel bevorzugt zu mindestens 99,9 Gew%, bevorzugter mindestens 99,99 Gew% aus $d_{em}$ Platinmetall.

Bevorzugt bestehen die Platinmetallpartikel aus einem Platinmetall und unvermeidlichen Verunreinigungen.

Im Rahmen der vorliegenden Erfindung ist es möglich, dass die Platinmetallpartikel nur ein Platinmetall enthalten. Alternativ ist es auch möglich, dass die Platinmetallpartikel zwei oder mehr Platinmetalle enthalten, bevorzugt in Form einer Legierung. Geeignete Legierungen sind beispielsweise Legierungen aus mindestens zwei Platinmetallen wie z.B. Pt-Rh- oder Pt-Ir-Legierungen. Der Platingehalt dieser Legierungen kann über einen breiten Bereich variieren und liegt beispielsweise im Bereich von 95 Gew% bis 20 Gew%. Als beispielhafte Legierungen können in diesem Zusammenhang eine Platin-Rhodium-Legierung mit einem Rhodiumgehalt von 20 Gew% ("PtRh20") und Platin-Iridium-Legierungen mit einem Iridiumgehalt von 10 Gew% ("PtIr10"), 20 Gew% ("PtIr20"), 30 Gew% ("PtIr30") oder 50 Gew% ("PtIr50") genannt werden.

Bevorzugt enthält das erfindungsgemäße Pulver die Platinmetallpartikel in einem Anteil von mindestens 90 Gew%, bevorzugter mindestens 95 Gew% oder sogar mindestens 99 Gew%, bezogen auf das Gesamtgewicht des Pulvers. In einer bevorzugten Ausführungsform besteht das Pulver aus den Platinmetallpartikeln.

Wie oben bereits ausgeführt, weisen die Edelmetallpartikel des erfindungsgemäßen Pulvers eine Partikelgrößenverteilung mit einem $d_{10}$-Wert von $\geq 10,0\ \mu m$ und einen $d_{90}$-Wert von $\leq 80,0\ \mu m$ auf.

In einer bevorzugten Ausführungsform sind der $d_{10}$-Wert $\geq 11,0\ \mu m$, bevorzugter $\geq 15,0\ \mu m$, noch bevorzugter $\geq 20,0\ \mu m$, und der $d_{90}$-Wert $\leq 70,0\ \mu m$.

Bevorzugt beträgt die Differenz zwischen dem $d_{90}$-Wert und dem $d_{10}$-Wert (d.h. $d_{90}-d_{10}$) mindestens 15 $\mu m$, bevorzugter mindestens 20 $\mu m$.

Bevorzugt liegt der $d_{10}$-Wert im Bereich von 10,0 bis 35,0 $\mu m$, bevorzugter 11,0 bis 32,0 $\mu m$, und/oder liegt der $d_{90}$-Wert im Bereich von 40,0 bis 80,0 $\mu m$, bevorzugter 43,0 bis 70,0 $\mu m$.

In einer bevorzugten Ausführungsform bestehen die Platinmetallpartikel aus Iridium und unvermeidlichen Verunreinigungen (deren Anteil bevorzugt maximal 0,1 Gew%, bevorzugter maximal 0,01 Gew%, bezogen auf das Gesamtgewicht der Edelmetallpartikel beträgt), der $d_{10}$-Wert liegt im Bereich von 20,0 bis 30,0 $\mu m$, der $d_{90}$-Wert liegt im Bereich von 40,0 bis 80,0 $\mu m$, bevorzugter 43,0 bis 70,0 $\mu m$, wobei die Differenz zwischen dem $d_{90}$-Wert und dem $d_{10}$-Wert bevorzugt mindestens 20 $\mu m$ bevorzugter 20-40 $\mu m$ beträgt.

Bevorzugt genügt das Pulver der folgenden Bedingung:

$$F / \rho_{TH} \leq 0,30\ s/(50\ cm^3)$$

wobei

F die Fließfähigkeit des Pulvers in s/(50 g) ist, bestimmt gemäß DIN EN ISO 4490:2014-11, und
$\rho_{TH}$ die theoretische Dichte (in g/cm$^3$) des die Edelmetallpartikel bildenden Edelmetalls ist.

Bevorzugter gilt $F / \rho_{TH} \leq 0,25\ s/(50\ cm^3)$, und noch bevorzugter gilt $F / \rho_{TH} \leq 0,20\ s/(50\ cm^3)$.

Als Maß für die Sphärizität eines Partikels kann in erster Näherung das Verhältnis seines minimalen Durchmessers $d_{min}$ zu seinem maximalen Durchmesser $d_{max}$ angesehen werden. Je näher dieser Wert bei 1,0 liegt, desto höher die Sphärizität des Partikels.

Bezogen auf die Anzahl der Platinmetallpartikel, genügen bevorzugt mindestens 80%, noch bevorzugter mindestens 90% der Edelmetallpartikel der folgenden Bedingung:

$$0,8 \leq d_{min}/d_{max} \leq 1,0;$$

wobei $d_{min}$ der minimale Durchmesser und $d_{max}$ der maximale Durchmesser eines Platinmetallpartikels sind.

Geeignete Verfahren für die Herstellung von Metallpartikeln mit möglichst sphärischer Form sind dem Fachmann prinzipiell bekannt. Bevorzugt erfolgt die Herstellung des Pulvers aus Platinmetallpartikeln durch ein Verdüsungsverfahren, insbesondere einer Gasverdüsung (z.B. unter Verwendung von Stickstoff oder einem Edelgas wie Argon oder Helium als Verdüsungsgas), einer Plasmaverdüsung, einer Zentrifugalverdüsung oder einer tiegellosen Verdüsung (z.B. einem als "Rotating-Electrode"-Prozess (REP) bezeichneten Verfahren, insbesondere ein "Plasma-Rotating-Electrode"-Prozess (PREP)). Ein weiteres beispielhaftes Verfahren ist das EIGA-Verfahren ("Electrode Induction-Melting Gas Atomisation"), induktives Aufschmelzen des Ausgangsmaterials und anschließend Gasverdüsung.

Bei der Gasverdüsung wird das Ausgangsmaterial unter einer Luft- oder Schutzgasglocke oder Vakuum geschmolzen. Die Kammer wird dann mit Gas gefüllt, um das geschmolzene Metall durch die Düse zu treiben, wo ein Verdüsungsgas (z.B. Stickstoff oder ein Edelgas wie Helium oder Argon) mit hoher Geschwindigkeit auf die fließende Schmelze auftrifft und diese aufbricht. Es entstehen sphärische Metalltröpfchen, die dann zu sphärischen Metallpartikeln erstarren.

Bei der Plasmaverdüsung wird das Ausgangsmaterial einem Plasmabrenner zugeführt, der das Pulver mit Hilfe eines Gases verdüst.

Bei der Zentrifugalverdüsung werden Schmelztröpfchen von einer rotierenden Quelle weggeschleudert werden und erstarren zu sphärischen Metallpartikeln.

Bei der tiegelfreien Verdüsung unter Verwendung einer rotierenden Elektrode ("REP") rotiert ein Metallstab mit hoher Umdrehungsgeschwindigkeit, wobei sein freies Ende nach und nach, z.B. durch einen Elektronenstrahl, einen Lichtbogen oder ein Plasma, abgeschmolzen wird. Schmelztröpfchen werden von dem rotierenden Metallstab weggeschleudert und erstarren zu sphärischen Metallpartikeln Der Metallstab kann dabei entweder um eine horizontale oder um eine vertikale Achse rotieren. Da bei dem REP-Verfahren der Kontakt mit einem Tiegelmaterial vermieden wird, kann der Anteil unerwünschter metallischer oder nicht-metallischer Einschlüsse im Pulver und in den daraus hergestellten Bauteilen sehr gering gehalten werden.

Bevorzugt erfolgt die Verdüsung mit einem Inertgas (z.B. Stickstoff oder ein Edelgas wie Argon).

Bevorzugt erfolgt die Verdüsung unter Ausschluss von Sauerstoff oder zumindest in der Anwesenheit von sehr geringen Sauerstoffmengen. Es ist daher bevorzugt, dass bei der Verdüsung weniger als 5 Vol-ppm Sauerstoff im Gasvolumen anwesend sind.

Um bei den durch die Verdüsung erhaltenen Platinmetallpartikeln eine Größenverteilung mit den oben beschriebenen $d_{10}$- und $d_{90}$-Werten zu erhalten, werden diese bevorzugt einem Klassierungsverfahren unterzogen. Bevorzugte Klassierungsverfahren sind Sieben, Windsichten und Zentrifugieren. Es können auch zwei oder mehr dieser Klassierungsverfahren hintereinander geschaltet werden, um eine möglichst genaue Einstellung der Partikelgrößenverteilung zu erzielen. Beispielsweise können zunächst eine oder mehrere Siebungen und anschließend eine oder mehrere Windsichtungen durchgeführt werden.

Die mittlere Kristallitgröße in den Platinmetallpartikeln ist $\geq$ 200 nm, bevorzugter $\geq$ 250 nm. Mit dieser Kristallitgröße kann eine weitere Optimierung von Fließfähigkeit, Qualität des Pulverauftrags und Porosität des über die additive Fertigung erhaltenen Edelmetallbauteils erreicht werden. In einer bevorzugten Ausführungsform liegt die mittlere Kristallitgröße der Edelmetallpartikel im Bereich von 200-400 nm, bevorzugter 250-360 nm.

Sofern erforderlich, lässt sich die genauere Einstellung einer geeigneten Kristallitgröße optional durch eine thermische Behandlung (z.B. Tempern) erzielen.

Die mittlere Kristallitgröße kann über die Scherrer-Gleichung anhand eines Pulver-Röntgenbeugungsdiffraktogramms bestimmt werden. Dies ist dem Fachmann bekannt.

Die vorliegende Erfindung betrifft weiterhin die Verwendung des erfindungsgemäßen Pulvers in einem additiven Fertigungsverfahren. Unter Verwendung des oben beschriebenen Pulvers lassen sich in einem additiven Fertigungsverfahren Bauteile sehr hoher relativer Dichte (d.h. sehr geringer Porosität) herstellen.

Wie oben bereits erwähnt, bezeichnet der Begriff "additive Fertigung" einen Prozess, bei dem auf der Basis von digitalen 3D-Konstruktionsdaten durch das Ablagern von Material schichtweise ein Bauteil aufgebaut wird.

Geeignete additive Herstellungsverfahren sind dem Fachmann prinzipiell bekannt. Selektives Lasersintern (SLS), selektives Laserschmelzen (SLM), selektives Elektronenstrahlschmelzen, thermisches Spritzen, Kaltgasspritzen können beispielhaft genannt werden. Es ist auch möglich, ein additives Fertigungsverfahren mit einem zerspanenden Verfahren in einer Hybridvorrichtung zu kombinieren.

Weiterhin betrifft die vorliegende Erfindung ein Bauteil, das über ein additives Fertigungsverfahren aus dem oben beschriebenen Pulver herstellbar ist und das eine Porosität von weniger als 10%, bevorzugt weniger als 5% aufweist.

Durch Verwendung des oben beschriebenen Platinmetallpulvers können Bauteile, die nahezu vollständig aus einem Platinmetall bestehen, auch in komplexen oder filigranen Strukturen hergestellt werden.

Das Bauteil kann beispielsweise zu mindestens 99,9 Gew%, bevorzugter mindestens 99,99 Gew% aus dem Platinmetall bestehen, d.h. der Anteil von Elementen, die keine Platinmetalle sind, beträgt bevorzugt maximal 0,1 Gew%, bevorzugter maximal 0,01 Gew%.

Bei dem erfindungsgemäßen Bauteil kann es sich beispielsweise um ein Bauteil einer Zündkerze (insbesondere die Elektrode einer Zündkerze), eine Düse (beispielsweise eine Düse in einer Verbrennungskammer), einen Teil eines Schmuckgegenstandes oder um eine Schwungmasse (z.B. in einer Uhr) handeln.

Weiterhin betrifft die vorliegende Erfindung ein additives Fertigungsverfahren zur Herstellung eines Bauteils, folgende Schritte umfassend:

(a) Aufbringen des oben beschriebenen Pulvers in Form einer ersten Schicht auf einem Substrat in einem Bauraum,

(b) zumindest teilweise Aufschmelzen des Pulvers der ersten Schicht mit energiereicher Strahlung und Erstarren lassen des aufgeschmolzenen Pulvers,

(c) Aufbringen einer weiteren Schicht des Pulvers auf der ersten Schicht,

(d) zumindest teilweise Aufschmelzen des Pulvers der weiteren Schicht mit energiereicher Strahlung und Erstarren lassen des aufgeschmolzenen Pulvers,

(e) Wiederholen der Schritte (c) und (d).

Üblicherweise wird der Bauraum vor Schritt (a) evakuiert oder mit einem inerten Gas (z.B. Stickstoff oder einem Edelgas) befüllt.

Bei der energiereichen Strahlung kann es sich beispielsweise um Laser- oder Elektronenstrahlen handeln.

Am Ende des Verfahrens kann freies bzw. loses Pulver vom Bauteil entfernt werden.

Optional kann das Bauteil nach dem additiven Verfahren einer Nachverdichtung unterzogen werden. Auch eine optionale Nachbearbeitung des Bauteils (z.B. durch Polieren, Schleifen, Ätzen, Bohren, Fräsen oder Beschichten) ist möglich.

Anhand der nachfolgenden Beispiele wird die Erfindung eingehender beschrieben.

**Beispiele**

**A) Messmethoden**

Die in der vorliegenden Erfindung verwendeten Parameter wurden gemäß den folgenden Messmethoden bestimmt.

Partikelgrößenverteilung und deren $d_{10}$- und $d_{90}$-Werte

Die Partikelgrößenverteilung wurde durch Laserbeugung mit dem Gerät "Sympatec Helos BR/R3" bestimmt. Messbereich: 0,9-175 und 4,5-875

Das für die Dispergierung der Pulverpartikel verwendete Dispergiersystem: RODOD/M Trockendispergiersystem mit Schwingrinnendosierer VIBRI (mit Venturi-Düse). Probenmenge: ca. 5 g.

Wellenlänge der Laserstrahlung: 632,8 nm

Auswertung erfolgt über Mie-Theorie.

Die Partikelgrößen werden als Massenverteilung erhalten, d.h. im Rahmen der vorliegenden Erfindung wird die Partikelgrößenverteilung in Form einer Massenverteilungssummenkurve bestimmt.

Aus der durch Laserbeugung gemessenen Partikelgrößenverteilung (Massenverteilung) lassen sich die $d_{10}$und $d_{90}$-Werte ablesen.

Fließfähigkeit des Pulvers

Bestimmt nach DIN EN ISO 4490 mittels Hall Flowmeter der Firma Impact Innovations.

Die Werte für die theoretische Dichte der Edelmetalle (zur Normierung der Fließfähigkeit auf die Dichte) können entsprechenden Standardwerken entnommen werden. So beträgt beispielsweise die theoretische Dichte von Iridium 22,56 $g/cm^3$, Gold 19,32 $g/cm^3$, Silber 10,49 $g/cm^3$, PtRh20 18,71 $g/cm^3$, PtIr50 22,05 $g/cm^3$.

$d_{min}$ und $d_{max}$ der Edelmetallpartikel

Minimale ($d_{min}$) und maximale Durchmesser ($d_{max}$) der Partikel wurden durch optische Bildanalyse folgendermaßen bestimmt:

In Anlehnung an ISO 9276-1, ISO 9276-6 und ISO13320 wurde die Morphologie und Form der Partikel mit einem QICPIC-Bildanalysesystem (Sympatec GmbH System-Partikel-Technik Germany) bestimmt. Die trockene Aufgabe der Partikel wurde mit Pressluft und der am QICPIC angeschlossenen RODOS/L (0.50 63.0 mm) Einheit durchgeführt. Die Messfläche wurde auf M6 eingestellt, was Partikel mit einem Durhcmesser von 5 bis 170 $\mu m$ abdeckt. Zusätzliche Parameter waren: Bildfrequenz = 450 Hz, Zufuhr-Rate VIBRI = 20 %, Trichterhöhe = 2 mm, Innendurchmesser des Dispersionsrohres = 4 mm, Druck: 1 bar. FERET_MIN (minimaler Durchmesser $d_{min}$) and FERET_MAX (maximaler Durchmesser $d_{max}$) wurden bestimmt. Als Maß für die Sphärizität eines Partikels wurde in erster Näherung das Verhältnis des minimalen Durchmessers $d_{min}$ zum maximalen Durchmesser $d_{max}$ benutzt.

Mittlere Kristallitgröße

Pulver-Röntgenbeugungsdiffraktogramme wurden mit einem STADI P Zweikreis-Diffraktometer von Stoe & Cie in Transmission gemessen. Die Messung erfolgte mit Cu $K_{\alpha 1}$-Strahlung. Für die Kalibrierung wurde der NIST-Standard Si (640 d) verwendet. Die 2-theta-Position eines Reflexes wurde anhand seines Peakmaximums bestimmt.
Die Beugungsreflexe des Pulver-Röntgenbeugungsdiffraktogramms wurden unter Verwendung der Stoe Pattern-Fitting-Software mathematisch gefittet und die Halbwertsbreiten (FWHM) der Beugungsreflexe wurden bestimmt.
Die gemessenen Werte wurden gegenüber dem Gerätestandard LaB6 NIST (660 b) korrigiert.
Unter Verwendung der Stoe-Software wurde die mittlere Kristallitgröße bestimmt. Dazu wurde die Scherrer-Gleichung auf den (111)-Reflex angewandt. Wie dem Fachmann bekannt ist, lautet die Scherrer-Gleichung folgendermaßen:

$$d = (K * \lambda) / (\beta * \cos \theta)$$

wobei

d die mittlere Kristallitgröße ist,
K ein dimensionsloser Formfaktor ist,
$\lambda$ die Wellenlänge der Röntgenstrahlung ist,
$\beta$ die volle Halbwertsbreite des Reflexes, gemessen im Bogenmaß, ist,
$\theta$ der Beugungswinkel ist.
Für K wurde ein Wert von 1,0 genommen.

Porosität

Die Porosität ergibt sich gemäß der folgenden Gleichung:

$$\text{Porosität P (in \%)} = (1 - (\rho_{geo} / \rho_{th})) \times 100\%$$

wobei
$\rho_{geo}$ die geometrische Dichte des Bauteils und $\rho_{th}$ die theoretische Dichte des Bauteils ist.
Die geometrische Dichte kann nach dem Archimedes-Prinzip beispielsweise mit einer hydrostatischen Waage ermittelt werden. Die theoretische Dichte des Bauteils entspricht der theoretischen Dichte des Edelmetalls, aus dem das Bauteil gebildet ist.
Die relative Dichte $D_{rel}$ (in %) ergibt sich aus $(\rho_{geo} / \rho_{th}) \times 100\%$. Somit gilt: $P = 1 - D_{rel}$

Zusammensetzung der Edelmetallpartikel

Bestimmt durch optische Emissionsspektrometrie mittels induktiv gekoppeltem Plasma (ICP-OEC).

**B) Herstellung von Pulvern aus sphärischen Edelmetallpartikeln und deren Verwendung für die Herstellung von Edelmetallbauteilen durch additive Fertigung**

Unter Verwendung verschiedener Edelmetalle wurden Edelmetallpulver über ein Verdüsungsverfahren hergestellt. Es wurden Ir-Pulver, PtRh20-Pulver , PtIr50-Pulver, Ag-Pulver und Au-Pulver hergestellt.

| | |
|---|---|
| Beispiele 1-4 und Vergl.bsp. 1-3: | Pulverpartikel bestehen aus Iridium |
| Beispiel 5 und Verl.bsp. 4: | Pulverpartikel bestehen aus PtRh20-Legierung |
| Beispiel 6 und Vergl.bsp. 5: | Pulverpartikel bestehen aus PtIr50-Legierung |
| Beispiel 7 und Vergl.bsp. 6: | Pulverpartikel bestehen aus Silber |
| Beispiel 8 und Vergl.bsp. 7: | Pulverpartikel bestehen aus Gold |

Beispiele 7 und 8 fallen nicht unter die vorliegende Erfindung.
Die Herstellung der Pulver erfolgte sowohl in den erfindungsgemäßen Beispielen wie auch in den Vergleichsbeispielen jeweils durch induktives Aufschmelzen des Ausgangsmaterials und Gasverdüsung (EIGA ("Electrode Induction-Melting Gas Atomisation")) unter Verwendung von Argon. Durch dieses Verfahren werden sphärische Pulverpartikel erhalten.

Anschließend wurden die über das Verdüsungsverfahren erhaltenen Pulver durch Siebung klassiert. Die Siebung erfolgte mit dem Gerät Retsch AS 200. Es wurden Siebe mit 20 μm, 45, 63 und 140 Maschenweite verwendet und es wurde 2-5 Minuten lang mit einer Menge von ca. 100 g bei unterschiedlichen Amplituden gesiebt.

Die $d_{10}$- und $d_{90}$-Werte der klassierten Pulver wurden bestimmt. Außerdem wurden Fließfähigkeit, Kristallitgröße und Kristallinität der Pulver gemessen.

Aus diesen Pulvern wurde in einem additiven Fertigungsverfahren jeweils ein Bauteil wurde hergestellt. Es wurden stets die gleichen Prozessparameter verwendet. Die Herstellung des Bauteils erfolgte durch "Selective Laser Melting" (SLM). Anlage: Anlage von Fa. ConceptLaser, Modell MLab.

Die Qualität des Pulverauftrags (d.h. der in den Bauraum eingebrachten Pulverschichten) wurde anhand der Anzahl der visuell erkennbaren Fehlstellen (z.B. Spur durch grobe Partikel oder Verklumpungen) pro 30 Auftragsvorgängen auf einer Fläche von 50 cm$^2$ bewertet.

Die geometrische Dichte sowie die relative Dichte (d.h. Quotient aus geometrischer Dichte und theoretischer Dichte) wurden für die erhaltenen Bauteile bestimmt.

Die Ergebnisse für die aus Iridiumpartikeln bestehenden Pulver sowie die daraus hergestellten Iridium-Bauteile sind in der Tabelle 1 zusammengefasst.

Tabelle 1: Eigenschaften der Iridiumpulver und der daraus hergestellten Bauteile

|  | Bsp. 1 | Bsp. 2 | Bsp. 3 | Bsp. 4 | Vgl.bsp. 1 | Vgl.bsp. 2 | Vgl.bsp. 3 |
|---|---|---|---|---|---|---|---|
| $d_{10}$ [μm] | 22,46 | 28,34 | 11,8 | 12,4 | 136,96 | 9,3 | 4,2 |
| $d_{90}$ [μm] | 48,15 | 67,25 | 47,5 | 67,5 | 292,79 | 46,9 | 68,6 |
| Fließfähigkeit (s/50g) | 3,5 | 3,1 | 3,8 | 4,1 | 6,9 | nicht messbar* | 6,9 |
| Fließfähigkeit | sehr gut | sehr gut | gut | gut | mäßig | schlecht | mäßig |
| Fließfähigkeit, [s/cm$^3$] normiert auf die Dichte | 0,16 | 0,14 | 0,17 | 0,18 | 0,31 |  | 0,31 |
| Kristallitgröße [nm] | 306 | 320 | 291 | 310 | 171 | 191 | 160 |
| Qualität Pulverauftrag | 0-1 | 0-1 | 1-2 | 1-2 | 2-4 | 4-10 | 2-4 |
| Dichte nach additiver Fertigung [g/cm$^3$] | 21,91 | 21,89 | 21,84 | 21,83 | 20,82 | 19,8 | 20,82 |
| Dichte nach additiver Fertigung [%] | 97,12 | 97,03 | 96,81 | 96,76 | 92,29 | 87,77 | 92,29 |
| *Pulver blieb im Trichter hängen. | | | | | | | |

Qualität des Pulverauftrags: Anzahl der visuell erkennbaren Fehlstellen (z.B. Spur durch grobe Partikel oder Verklumpungen) pro 30 Auftragsvorgängen auf einer Fläche von 50 cm$^2$ bewertet, d.h. je geringer der Wert, desto besser die Qualität des Pulverauftrags

Wie die Ergebnisse der Tabelle 1 belegen, ermöglichen nur die Iridiumpulver, deren $d_{10}$-Wert ≥10,0 und $d_{90}$-Wert ≤80,0 ist, die Realisierung einer hohen Fließfähigkeit bei gleichzeitig hoher Qualität des Pulverauftrags und die Herstellung eines Bauteils geringer Porosität (d.h. hoher relativer Dichte) über ein additives Fertigungsverfahren.

Wie insbesondere Bsp. 3 ($d_{10}$-Wert: 11,8 μm; $d_{90}$-Wert: 47,5 μm) und Vgl.bsp. 2 ($d_{10}$-Wert: 9,3 μm; $d_{90}$-Wert: 46,9 μm) zeigen, führt ein $d_{10}$-Wert von weniger als 10 μm schlagartig zu einer signifikanten Verschlechterung sowohl der Fließfähigkeit wie auch der Qualität der aufgetragenen Pulverschicht.

Die Ergebnisse für die PtRh20-Pulver sowie die daraus hergestellten PtRh20-Bauteil sind in der Tabelle 2 zusammengefasst.

Tabelle 2:Eigenschaften der PtRh20-Pulver und der daraus hergestellten Bauteile

|  | Bsp. 5 | Vgl.bsp. 4 |
|---|---|---|
| $d_{10}$ [μm] | 12,3 | 148,5 |
| $d_{90}$ [μm] | 65,7 | 307,5 |

(fortgesetzt)

|  | Bsp. 5 | Vgl.bsp. 4 |
|---|---|---|
| Fließfähigkeit [s/50g] | 4,5 | 6,5 |
| Fließfähigkeit | gut | mäßig |
| Fließfähigkeit, [s/cm$^3$] normiert auf die Dichte | 0,24 | 0,35 |
| Qualität Pulverauftrag | 0-1 | 2-4 |
| Dichte nach additiver Fertigung [g/cm$^3$] | 18,5 | 17,6 |
| Dichte nach additiver Fertigung [%] | 98,88 | 94,07 |

Die Ergebnisse für die PtIr50-Pulver sowie die daraus hergestellten PtIr50-Bauteil sind in der Tabelle 3 zusammengefasst.

Tabelle 3:Eigenschaften der PtIr50-Pulver und der daraus hergestellten Bauteile

|  | Bsp. 6 | Vgl.bsp. 5 |
|---|---|---|
| $d_{10}$ [µm] | 13,1 | 106,2 |
| $d_{90}$ µm] | 66,4 | 293,4 |
| Fließfähigkeit [s/50g] | 3,4 | 6,8 |
| Fließfähigkeit | gut | mäßig |
| Fließfähigkeit, [s/cm$^3$] normiert auf die Dichte | 0,15 | 0,31 |
| Qualität Pulverauftrag | 0-1 | 2-4 |
| Dichte nach additiver Fertigung [g/cm$^3$] | 21,98 | 20,8 |
| Dichte nach additiver Fertigung [%] | 99,7 | 94,3 |

Die Ergebnisse für die Ag-Pulver sowie die daraus hergestellten Ag-Bauteil sind in der Tabelle 4 zusammengefasst.

Tabelle 4:Eigenschaften der Ag-Pulver und der daraus hergestellten Ag-Bauteile

|  | Bsp. 7 | Vgl.bsp. 6 |
|---|---|---|
| $d_{10}$ [µm] | 15,3 | 128,5 |
| $d_{90}$ [µm] | 65,7 | 307,5 |
| Fließfähigkeit [s/50g] | 3 | 6,6 |
| Fließfähigkeit | gut | mäßig |
| Fließfähigkeit, [s/cm$^3$] normiert auf die Dichte | 0,29 | 0,63 |
| Qualität Pulverauftrag | 0-1 | 2-4 |
| Dichte nach additiver Fertigung [g/cm$^3$] | 10,35 | 9,5 |
| Dichte nach additiver Fertigung [%] | 98,67 | 90,56 |

Die Ergebnisse für die Au-Pulver sowie die daraus hergestellten Au-Bauteil sind in der Tabelle 5 zusammengefasst.

Tabelle 5:Eigenschaften der Au-Pulver und der daraus hergestellten Au-Bauteile

|  | Bsp. 8 | Vgl.bsp. 7 |
|---|---|---|
| $d_{10}$ [µm] | 27,3 | 4,9 |

(fortgesetzt)

|  | Bsp. 8 | Vgl.bsp. 7 |
|---|---|---|
| $d_{90}$ [$\mu$m] | 51,6 | 196,5 |
| Fließfähigkeit [s/50g] | 3,2 | 5,9 |
| Fließfähigkeit | gut | mäßig |
| Fließfähigkeit, [s/cm$^3$] normiert auf die Dichte | 0,17 | 0,31 |
| Qualität Pulverauftrag | 0-1 | 2-4 |
| Dichte nach additiver Fertigung [g/cm$^3$] | 19,1 | 17,8 |
| Dichte nach additiver Fertigung [%] | 98,86 | 92,13 |

Auch die Ergebnisse der Tabellen 2-5 belegen, dass nur die Edelmetallpulver, deren $d_{10}$-Wert $\geq$10,0 und $d_{90}$-Wert $\leq$80,0 ist, die Realisierung einer hohen Fließfähigkeit bei gleichzeitig hoher Qualität des Pulverauftrags und die Herstellung eines Bauteils geringer Porosität (d.h. hoher relativer Dichte) über ein additives Fertigungsverfahren ermöglichen.

## Patentansprüche

1. Ein Pulver aus sphärischen Edelmetallpartikeln, die eine Partikelgrößenverteilung, bestimmt als Massenverteilungssummenkurve durch Laserbeugung, mit einem $d_{10}$-Wert von $\geq$ 10,0 $\mu$m und einem $d_{90}$-Wert von $\leq$ 80,0 $\mu$m aufweisen, wobei das Edelmetall Platin, Iridium, Palladium, Ruthenium, Rhodium oder Osmium oder eine Legierung aus mindestens zwei der vorgenannten Platinmetalle ist und wobei die Edelmetallpartikel eine mittlere Kristallitgröße $\geq$ 200 nm aufweisen und die mittlere Kristallitgröße über Röntgenbeugung durch die in der Beschreibung angegebene Methode bestimmt wird.

2. Das Pulver nach Anspruch 1, wobei die Edelmetallpartikel Elemente, die keine Edelmetalle sind, in einem Anteil von maximal 0,1 Gew% enthalten.

3. Das Pulver nach einem der vorstehenden Ansprüche, wobei der $d_{90}$-Wert und der $d_{10}$-Wert um mindestens 15 $\mu$m differieren.

4. Das Pulver nach einem der vorstehenden Ansprüche, wobei der $d_{10}$-Wert im Bereich von 10,0 bis 35,0 $\mu$m liegt, und/oder der $d_{90}$-Wert im Bereich von 40,0 bis 80,0 $\mu$m liegt.

5. Das Pulver nach einem der vorstehenden Ansprüche, wobei das Edelmetall Iridium ist, der $d_{10}$-Wert im Bereich von 20,0 bis 30,0 $\mu$m liegt, der $d_{90}$-Wert im Bereich von 40,0 bis 80,0 $\mu$m liegt und die Differenz zwischen dem $d_{90}$-Wert und dem $d_{10}$-Wert mindestens 20 $\mu$m beträgt.

6. Das Pulver nach einem der vorstehenden Ansprüche, wobei das Pulver der folgenden Bedingung genügt:

$$F / \rho_{TH} \leq 0{,}30 \ s/(50 \ cm^3)$$

wobei

F die Fließfähigkeit des Pulvers in s/(50 g) ist, bestimmt gemäß DIN EN ISO 4490:2014-11, und
$\rho_{TH}$ die theoretische Dichte in g/cm$^3$ des die Edelmetallpartikel bildenden Edelmetalls ist.

7. Das Pulver nach einem der vorstehenden Ansprüche, wobei, bezogen auf die Anzahl der Edelmetallpartikel, mindestens 80% der Edelmetallpartikel der folgenden Bedingung genügen:

$$0{,}8 \leq d_{min}/d_{max} \leq 1{,}0;$$

wobei $d_{min}$ der minimale Durchmesser und $d_{max}$ der maximale Durchmesser eines Edelmetallpartikels sind.

8.  Verwendung des Pulvers nach einem der Ansprüche 1-7 in einem additiven Fertigungsverfahren.

9.  Ein additives Fertigungsverfahren zur Herstellung eines Bauteils, folgende Schritte umfassend:

    (a) Aufbringen des Pulvers nach einem der Ansprüche 1-7 in Form einer ersten Schicht auf einem Substrat in einem Bauraum,
    (b) zumindest teilweise Aufschmelzen des Pulvers der ersten Schicht mit energiereicher Strahlung und Erstarren lassen des aufgeschmolzenen Pulvers,
    (c) Aufbringen einer weiteren Schicht des Pulvers auf der ersten Schicht,
    (d) zumindest teilweise Aufschmelzen des Pulvers der weiteren Schicht mit energiereicher Strahlung und Erstarren lassen des aufgeschmolzenen Pulvers,
    (e) Wiederholen der Schritte (c) und (d).

**Claims**

1.  Powder composed of spherical noble-metal particles having a particle size distribution, determined as a mass distribution cumulative curve by laser diffraction, with a $d_{10}$ value of $\geq 10.0$ μm and a $d_{90}$ value of $\leq 80.0$ μm, wherein the noble metal is platinum, iridium, palladium, ruthenium, rhodium or osmium or an alloy composed of at least two of the aforementioned platinum-group metals, and wherein the noble-metal particles have a mean crystallite size $\geq$ 200 nm and the mean crystallite size is determined via x-ray diffraction by the method stated in the description.

2.  Powder according to Claim 1 wherein the noble-metal particles contain elements which are not noble metals in a proportion of not more than 0.1% by weight.

3.  Powder according to either of the preceding claims, wherein the $d_{90}$ value and the $d_{10}$ value differ by at least 15 μm.

4.  Powder according to any of the preceding claims, wherein the $d_{10}$ value is within the range from 10.0 to 35.0 μm, and/or the $d_{90}$ value is within the range from 40.0 to 80.0 μm.

5.  Powder according to any of the preceding claims, wherein the noble metal is iridium, the $d_{10}$ value is within the range from 20.0 to 30.0 μm, the $d_{90}$ value is within the range from 40.0 to 80.0 μm and the difference between the $d_{90}$ value and the $d_{10}$ value is at least 20 μm.

6.  Powder according to any of the preceding claims, wherein the powder satisfies the following condition:

$$F / \rho_{TH} \leq 0.30 \text{ s}/(50 \text{ cm}^3)$$

    where

    F is the flowability of the powder in s/(50 g), determined in accordance with DIN EN ISO 4490:2014-11, and
    $\rho_{TH}$ is the theoretical density in g/cm$^3$ of the noble metal forming the noble-metal particles.

7.  Powder according to any of the preceding claims, wherein, based on the number of noble-metal particles, at least 80% of the noble-metal particles satisfy the following condition:

$$0.8 \leq d_{min}/d_{max} \leq 1.0;$$

    where $d_{min}$ and $d_{max}$ are the minimum diameter and the maximum diameter, respectively, of a noble-metal particle.

8.  Use of the powder according to any of Claims 1-7 in an additive manufacturing process.

9.  Additive manufacturing process for producing a component, comprising the following steps:

(a) applying the powder according to any of Claims 1-7 in the form of a first layer to a substrate in a construction space,
(b) at least partially melting the powder of the first layer using highenergy radiation and allowing solidification of the melted powder,
(c) applying a further layer of the powder to the first layer,
(d) at least partially melting the powder of the further layer using highenergy radiation and allowing solidification of the melted powder,
(e) repeating steps (c) and (d).

**Revendications**

1. Poudre composée de particules sphériques de métal noble, qui présente une distribution de tailles de particules, déterminée comme une courbe cumulative de distribution de masse par diffraction laser, ayant une valeur $d_{10} \geq$ 10,0 $\mu$m et une valeur $d_{90} \leq$ 80,0 $\mu$m, le métal noble étant le platine, l'iridium, le palladium, le ruthénium, le rhodium ou l'osmium ou un alliage d'au moins deux des métaux du groupe du platine susmentionnés et dans laquelle les particules de métal noble présentent une taille de cristallite moyenne $\geq$ 200 nm et la taille de cristallite moyenne est déterminée par diffraction de rayons X par la méthode indiquée dans la description.

2. Poudre selon la revendication 1, dans laquelle les particules de métal noble contiennent des éléments qui ne sont pas des métaux nobles en une proportion d'au plus 0,1 % en poids.

3. Poudre selon l'une quelconque des revendications précédentes, dans laquelle la valeur $d_{90}$ et la valeur $d_{10}$ diffèrent d'au moins 15 $\mu$m.

4. Poudre selon l'une quelconque des revendications précédentes, dans laquelle la valeur $d_{10}$ se situe dans la plage de 10,0 à 35,0 $\mu$m, et/ou la valeur $d_{90}$ se situe dans la plage de 40,0 à 80,0 $\mu$m.

5. Poudre selon l'une quelconque des revendications précédentes, dans laquelle le métal noble est l'iridium, la valeur $d_{10}$ se situe dans la plage de 20,0 à 30,0 $\mu$m, la valeur $d_{90}$ se situe dans la plage de 40,0 à 80,0 $\mu$m, et la différence entre la valeur $d_{90}$ et la valeur $d_{10}$ est d'au moins 20 $\mu$m.

6. Poudre selon l'une quelconque des revendications précédentes, dans laquelle la poudre satisfait à la condition suivante :

$$F / \rho_{TH} \leq 0,30 \ s/(50 \ cm^3)$$

dans laquelle

F est la fluidité de la poudre en s/(50 g), déterminée selon DIN EN ISO 4490:2014-11, et
$\rho_{TH}$ est la densité théorique en g/cm$^3$ du métal noble formant les particules de métal noble.

7. Poudre selon l'une quelconque des revendications précédentes, dans laquelle, par rapport au nombre de particules de métal noble, au moins 80 % des particules de métal noble satisfont à la condition suivante :

$$0,8 \leq d_{min}/d_{max} \leq 1,0 \ ;$$

$d_{min}$ étant le diamètre minimal et $d_{max}$ le diamètre maximal d'une particule de métal noble.

8. Utilisation de la poudre selon l'une quelconque des revendications 1 à 7 dans un procédé de fabrication additif.

9. Procédé de fabrication additif pour la fabrication d'un composant, comprenant les étapes suivantes :

(a) application de la poudre selon l'une quelconque des revendications 1 à 7 sous forme d'une première couche sur un substrat dans une chambre de construction,
(b) fusion au moins partielle de la poudre de la première couche au moyen de rayonnement riche en énergie et solidification de la poudre fondue,
(c) application d'une couche supplémentaire de la poudre sur la première couche,
(d) fusion au moins partielle de la poudre de la couche supplémentaire au moyen de rayonnement riche en énergie et solidification de la poudre fondue,
(e) répétition des étapes (c) et (d).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013128416 A
- JP 2009270130 A